# EUROPEAN PATENT SPECIFICATION

(11) **EP 1 620 771 B1**
(45) Date of publication and mention of the grant of the patent: **24.01.2018**
(21) Application number: 04725091.5
(22) Date of filing: 01.04.2004
(51) Int. Cl.: G05D 22/02, F24F 11/00, F24F 3/14

(54) **DEHUMIDIFIER CONTROL SYSTEM**
ENTFEUCHTERSTEUERSYSTEM
SYSTEME DE COMMANDE DE DESHUMIDIFICATEUR

(30) Priority: 05.04.2003 GB 0307910; 08.05.2003 GB 0310637
(43) Date of publication of application: 01.02.2006
(73) Proprietor: EBAC LIMITED, Bishop Auckland, County Durham DL14 9AL (GB)
(72) Inventor: ELLIOTT, John Malcolm, Bishop Auckland, Durham DL14 7QZ (GB)
(74) Representative: Craske, Stephen Allan
(86) International application number: PCT/GB2004/001402
(87) International publication number: WO 2004/090653

(56) References cited:
- DE-A- 4 112 198
- DE-A- 4 331 062
- US-A- 3 496 731
- US-B1- 6 230 980

## Description

### TECHNICAL FIELD OF THE INVENTION

This invention relates to dehumidifiers of the kind which include a vapour compression circuit in which a compressor circulates refrigerant vapour through a condenser, an expansion device and an evaporator for removing water vapour from air passing through the dehumidifier.

### BACKGROUND

Many dehumidifiers are controlled by a humidistat which senses the relative humidity (RH) of the air, causing the dehumidifier to run when the RH exceeds a set level which is adjustable by the user. Such a dehumidifier is disclosed in US-A-3 496 731.

The structure and fittings of a house or other building tend to absorb water vapour so that when a dehumidifier is operated in the building for the first time it needs to run continuously for several weeks until the excess moisture is removed. Once the building and its contents have dried out however, the dehumidifier only needs to remove peaks of moisture which may be caused by cooking, running a shower, drying clothes etc.

Apart from peaks of moisture, water vapour is also continuously added to the air within a building at a slower rate from various sources such as through breathing out water vapour. This too can cause excess moisture to build up over a period, which is absorbed into the structure and fittings of the building and also critically increases the RH in cooler areas. This too must be removed on a daily basis regardless of the prevailing RH level.

The RH in a building also varies with the seasons. During summer months the RH is often relatively high, but in winter the RH tends to be lower due to lower external humidity and heating within the building. On the other hand, the RH will be higher in unheated rooms or adjacent to a window because the air temperature will be lower. Thus, measuring the RH with a centrally-placed humidistat may give an RH reading of only 50% whereas colder areas of the same room could be as high as 80% or even 100% on windows and other cold surfaces giving rise to condensation.

Thus the conventional use of a humidistat is not a very efficient way to control a dehumidifier.

The present invention seeks to provide a new and inventive form of dehumidifier which is more efficient than existing dehumidifiers.

### SUMMARY OF THE INVENTION

The present invention proposes a dehumidifier which is arranged to store a number of individual relative humidity (RH) readings at intervals over a period of time and which uses the stored readings to establish an RH reference level, and the operation of the dehumidifier is determined by whether the current RH value is above or below the reference level,
*characterised in that*
the reference level is ascertained by the relative proportion of stored readings which fall above and below the current RH value, disregarding the amount by which the readings differ from the current RH value, when less than half the stored readings fall below the current RH value the dehumidifier enters a reduced running mode, and when more than half the stored readings fall below the current RH value the dehumidifier runs continuously.

Preferably the duty cycle during low RH periods (i.e. when the RH is below the reference level) can be set by the user, so that the dehumidifier may run for, say 75% or 50% of the time. Similarly, an override condition may be selected during which the dehumidifier runs continuously irrespective of the prevailing RH level.

When the current RH level rises above a predetermined maximum the dehumidifier preferably runs continuously. Conversely, when the RH level falls below a predetermined minimum level the dehumidifier may be permanently off.

Such an arrangement avoids the risk of large deviations from the average for a relatively short period causing a disproportionate effect on the reference level, e.g. due to cooking or running a shower.

### BRIEF DESCRIPTION OF THE DRAWINGS

The following description and the accompanying drawings referred to therein are included by way of non-limiting example in order to illustrate how the invention may be put into practice. In the drawings:
Figure 1 is a schematic diagram of a dehumidifier in accordance with the invention; and
Figure 2 is a graph showing how the "on" and "off' times of the dehumidifier may vary with relative humidity RH.

### DETAILED DESCRIPTION OF THE DRAWINGS

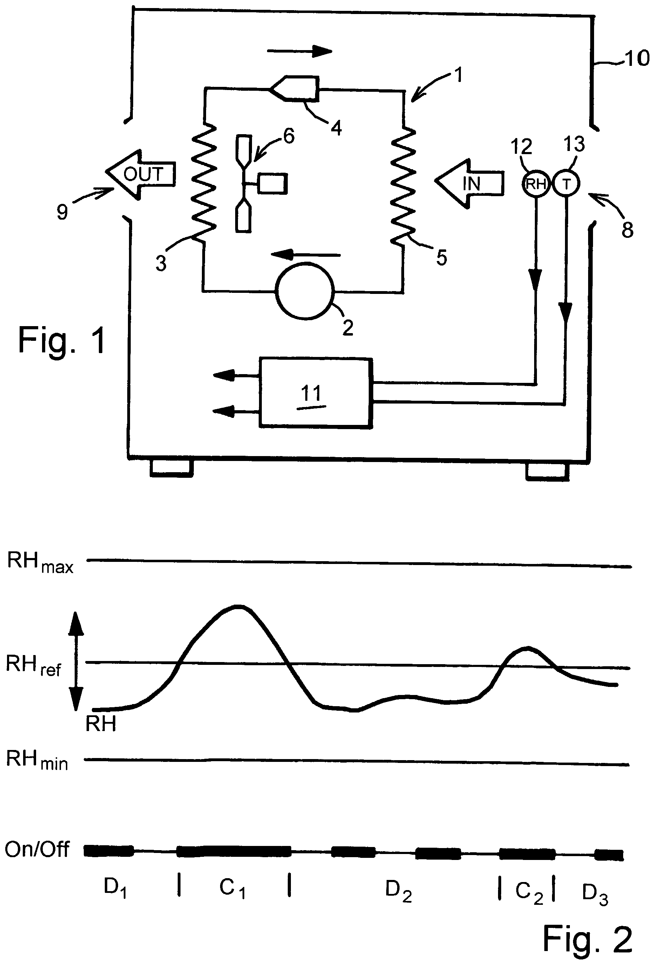

The dehumidifier shown in **Fig. 1** includes a housing 10 having an air inlet 8 and an air outlet 9. The housing contains a vapour compression circuit 1 in which a compressor 2 circulates refrigerant vapour under pressure through a condenser 3 wherein the refrigerant condenses and gives out heat. Condensed refrigerant then passes through an expansion device 4 such as a valve or small bore tube providing a restriction which reduces the temperature and pressure of the refrigerant entering evaporator coils 5. Vaporisation of the refrigerant in the evaporator 5 absorbs heat from ambient air so that the resulting temperature drop causes water vapour in the air to condense out on the surfaces of the evaporator coils. The ambient air is drawn into the dehumidifier by a fan 6, and after passing over the evaporator coils the air passes over the condenser to receive heat from the refrigerant so that the dehumidifier discharges warm air into the external environment. Refrigerant vapour from the evaporator coils is recirculated by the compressor 2 in a continuous cycle of condensation and evaporation.

The operation of the dehumidifier is overseen by an electronic controller 11, which also receives input from a RH sensor 12 arranged to monitor the ambient air at the point where it enters the dehumidifier before contact with the evaporator 5. The controller 11 also receives input from a temperature sensor 13, which is also arranged to monitor the ambient air entering the dehumidifier. It would also be possible for one or both of the sensors to be mounted elsewhere, inside or outside the dehumidifier, with an offset being applied to the readings to compensate if necessary. The controller 11 may control the compressor 2 and the fan 6 such that the compression circuit operates with alternating run and defrost cycles in known manner. The controller will typically include a microprocessor which reads data from the humidity sensor 12.

During a monitoring period of, say, 24 hours the controller may take periodic readings from the RH sensor 12 and temperature sensor 13 (e.g. every 30 minutes) which are stored in RAM. At the end of this period the stored RH readings may be used to compute a reference RH level which, in a simple example, may be the average of the stored readings. Thus, the reference level RH_{ref} will depend on the average RH level over the monitored period, but once the reference value has been established it is used to provide a fixed reference level for control of the dehumidifier over a succeeding period. Although the RH level may be monitored during successive discrete periods which are used to control the dehumidifier over the succeeding monitoring period it is generally preferable to continuously update the calculated reference values, or at least update the reference values at much shorter periods. Thus, every hour the values can be recalculated to include the most recent readings, at the same time omitting the oldest readings. As shown in **Fig. 2**, the current RH will vary throughout any given period, and when the prevailing RH rises above the reference level, for example due to cooking etc. as indicated by the sub-periods C₁ and C₂, the dehumidifier is operated to run continuously. In **Fig. 2**, the "on" periods of the dehumidifier are indicated by the solid black lines whereas the "off' periods are indicated by thin lines. This will ensure that any transient increases in humidity will be removed with optimum effect.

Rather than using a numeric average of the stored RH readings another option is to determine whether each of the stored readings is below or above the current RH value, the amount by which the readings differ from the current value being disregarded. When less than half of the stored readings fall below the current value the dehumidifier enters a reduced running mode. When more than half of the readings fall below the current RH value the dehumidifier runs continuously. When the next reading is taken the proportion falling below the current reading is recalculated and the mode is reset if necessary. Such an arrangement avoids the risk of large deviations from the average for a relatively short period causing a disproportionate effect on the reference level, e.g. due to cooking or running a shower.

During intermediate sub-periods D₁, D₂ and D₃ when the current RH value falls below RH_{ref}, the dehumidifier runs at a reduced duty cycle which is illustrated in **Fig. 2** by alternating relatively short "on" and "off' periods. A 50% duty cycle is illustrated by way of example, but the actual duty cycle may vary and could, for example, be user-selectable at say 75% and 50% figures. During this period the dehumidifier will operate intermittently to remove water from the atmosphere.

When the RH value is below the reference level it might be preferable to operate the dehumidifier more at some times of the day than others (e.g. at night). This could be achieved by providing the controller 11 with a real-time clock. Thus, by way of example, a 75% duty cycle setting could be achieved by running the dehumidifier continuously for 12 hours at night and then running at 50% duty cycle during the day so that, overall, the average duty cycle is about 75% over a 24 hour period. Similarly, the 50% setting could be achieved by a continuous run period and a 25% duty cycle period, or by 75% and 25% duty cycle periods, etc.

Other user-selectable modes may of course be provided. For example, a "continuous" mode may be selected during which the dehumidifier runs continuously irrespective of the actual RH level. This mode may, for example, be useful for drying out new or excessively damp buildings. Fig. 2 also shows predetermined maximum and minimum humidity levels, RHₘₐₓ and RHₘᵢₙ, which may be pre-programmed into the controller or calculated by the controller 11. Should the current RH reading exceed the maximum value the dehumidifier will operate continuously during the period in question regardless of RH_{ref}. This again ensures that a particularly damp building will be subjected to maximum drying. Similarly, should the current RH fall below the minimum RH level the dehumidifier will be continuously "off", thus preventing the dehumidifierfrom operating in very dry buildings for example. Again, user-selected override settings are possible.

It will be appreciated that throughout the period illustrated in Fig. 2 the controller would be storing periodic RH readings from which a new RH_{ref} value can be calculated for use as the reference RH level during the following period. Thus, the reference level is always determined by the average RH level during the preceding period.

In some circumstances it might be preferable to control the dehumidifier against the average temperature readings taken from the sensor 13 rather than the average RH readings. This would allow the dehumidifier to run more during the night for example (lower average temperature) to enable morning condensation to be reduced, or to run more during the day (higher average temperature) when water extraction is higher. The mode of operation can be selectable by the user.

It will be appreciated that when the dehumidifier is described herein as being continuously "on" this will be subject to normal defrosting periods which may from time to time become necessary to de-ice the condenser coils when the ambient temperature falls below about 18°C. The important thing is that when the reference level is exceeded the dehumidifier provides maximum water extraction but when the RH is below the reference level the extraction time is reduced.

## Claims

1. A dehumidifier of the kind which includes a vapour compression circuit in which a compressor (2) circulates refrigerant vapour through a condenser (3), an expansion device (4) and an evaporator (5) for removing water vapour from air passing through the dehumidifier, which is arranged to store a number of individual relative humidity (RH) readings at intervals over a period of time and which uses the stored readings to establish an RH reference level, and the operation of the dehumidifier is determined by whether the current RH value is above or below the reference level,
***characterised in that***
the reference level is ascertained by the relative proportion of stored readings which fall above and below the current RH value, disregarding the amount by which the readings differ from the current RH value, when less than half the stored readings fall below the current RH value the dehumidifier enters a reduced running mode, and when more than half the stored readings fall below the current RH value the dehumidifier runs continuously.

2. A dehumidifier according to Claim 1 in which the duty cycle (on/off ratio) of the dehumidifier when the RH is below the reference level is user-controllable.

3. A dehumidifier according to any preceding claim which has a user-selectable override condition during which the dehumidifier runs continuously irrespective of the current RH level.

4. A dehumidifier according to any preceding claim in which the dehumidifier runs continuously when the current RH rises above a predetermined maximum RH level.

5. A dehumidifier according to any preceding claim in which the dehumidifier is always off when the current RH falls below a predetermined minimum RH level.

## Patentansprüche

1. Entfeuchter von der Art, die einen Dampfkompressionskreislauf umfasst, in dem ein Kompressor (2) Kältemitteldampf durch einen Kondensator (3), eine Expansionsvorrichtung (4) und einen Verdampfer (5) zirkuliert, um Luft, die durch den Entfeuchter strömt, Wasserdampf zu entziehen, wobei der Entfeuchter dazu eingerichtet ist, eine Anzahl von individuellen Messwerten der relativen Feuchte (r.F.) zu Zeitpunkten über eine Zeitperiode zu speichern, und wobei der Entfeuchter die gespeicherten Messwerte verwendet, um ein r.F.-Referenzniveau zu bilden, und wobei der Betrieb des Entfeuchters dadurch bestimmt wird, ob der gegenwärtige r.F.-Wert oberhalb oder unterhalb des Referenzniveaus liegt,
**dadurch gekennzeichnet, dass**
das Referenzniveau bestimmt wird durch den relativen Anteil gespeicherter Messwerte, die oberhalb und unterhalb des gegenwärtigen r.F.-Wertes liegen, unabhängig von dem Betrag, um den sich die Messwerte von dem gegenwärtigen r.F.-Wert unterscheiden, wobei, wenn weniger als die Hälfte der gespeicherten Messwerte unter dem gegenwärtigen r.F.-Wert liegen, der Entfeuchter in einen reduzierten Betriebsmodus eintritt, und wenn mehr als die Hälfte der gespeicherten Messwerte unter dem gegenwärtigen r.F.-Wert liegen, der Entfeuchter kontinuierlich betrieben wird.

2. Entfeuchter nach Anspruch 1, bei dem das Betriebsverhältnis (Ein/Aus-Verhältnis) des Entfeuchters, wenn die r.F. unterhalb des Referenzniveaus ist, durch den Benutzer steuerbar ist.

3. Entfeuchter nach einem der vorhergehenden Ansprüche, der einen vom Benutzer auswählbaren Vorrangsbetriebszustand hat, in dem der Entfeuchter unabhängig von dem gegenwärtigen r.F.-Niveau kontinuierlich arbeitet.

4. Entfeuchter nach einem der vorhergehenden Ansprüche, wobei der Entfeuchter, wenn die gegenwärtige r.F. über ein vorgegebenes maximales r.F.-Niveau steigt, kontinuierlich arbeitet.

5. Entfeuchter nach einem der vorhergehenden Ansprüche, wobei der Entfeuchter immer ausgeschaltet ist, wenn die gegenwärtige r.F. unter ein vorgegebenes minimales r.F.-Niveau fällt.

## Revendications

1. Déshumidificateur du type qui comprend un circuit de compression de vapeur dans lequel un compresseur (2) fait circuler de la vapeur de réfrigérant à travers un condenseur (3), un dispositif de détente (4) et un évaporateur (5) pour retirer la vapeur d'eau de l'air passant à travers le déshumidificateur, qui est agencé pour stocker un nombre de lectures d'humidité relative (RH) individuelles à certains intervalles pendant une période de temps et qui utilise les lectures stockées pour établir un niveau de référence de RH, et le fonctionnement du déshumidificateur est déterminé selon si la valeur de RH en cours est au-dessus ou au-dessous du niveau de référence,
**caractérisé par le fait que**
le niveau de référence est déterminé par la proportion relative de lectures stockées qui sont au-dessus et au-dessous de la valeur de RH en cours, en ignorant la grandeur de laquelle les lectures diffèrent de la valeur de RH en cours, lorsque moins de la moitié des lectures stockées sont au-dessous de la valeur de RH en cours, le déshumidificateur entre dans un mode de fonctionnement réduit et, lorsque plus de la moitié des lectures stockées sont au-dessous de la valeur de RH en cours, le déshumidificateur fonctionne de manière continue.

2. Déshumidificateur selon la revendication 1, dans lequel le cycle de travail (rapport marche/arrêt) du déshumidificateur lorsque la RH est au-dessous du niveau de référence est commandable par l'utilisateur.

3. Déshumidificateur selon l'une quelconque des revendications précédentes, qui a un état de commande prioritaire sélectionnable par l'utilisateur, pendant lequel le déshumidificateur fonctionne de manière continue indépendamment du niveau de RH en cours.

4. Déshumidificateur selon l'une quelconque des revendications précédentes, dans lequel le déshumidificateur fonctionne de manière continue lorsque la RH en cours augmente au-dessus d'un niveau de RH maximal prédéterminé.

5. Déshumidificateur selon l'une quelconque des revendications précédentes, dans lequel le déshumidificateur est toujours à l'arrêt lorsque la RH en cours est au-dessous d'un niveau de RH minimal prédéterminé.
